# DEMANDE DE BREVET EUROPEEN

(11) **EP 2 446 746 A1**
(43) Date de publication de la demande: **02.05.2012**
(21) Numéro de dépôt: 11186525.9
(22) Date de dépôt: 25.10.2011
(51) Int. Cl.: A22C 29/02

(54) **Installation de traitement de produits alimentaires par un liquide**

(30) Priorité: 26.10.2010 FR 1004196
(71) Demandeur: Cryolink, 44000 Nantes (FR)
(72) Inventeur: Reverdy, Yves, 44000 Nantes (FR)
(74) Mandataire: Saint-Marc-Etienne, Christophe Andréas

(57) **Abrégé**

L'invention porte sur une installation de traitement de produits alimentaires (2) par un liquide (3), ladite installation comprenant des moyens (10) de convoyage desdits produits et des moyens (20) d'application dudit liquide sur lesdits produits, lesdits moyens d'application comprenant des moyens (21) d'amenée dudit liquide dans au moins un déversoir (22), ledit déversoir présentant un élément de fond (221) doté d'une pluralité d'orifices (2211) permettant la répartition par aspersion dudit liquide.

Selon l'invention, ledit déversoir (22) est susceptible de présenter une position de traitement dans laquelle ledit élément de fond (221) dudit déversoir s'étend selon une pente, et ledit élément de fond est bordé de parois, dont une paroi arrière (222) et deux parois latérales (223, 224).

## Description

L'invention concerne le domaine de la conception et de la réalisation d'installations permettant de traiter, au moyen d'un liquide, des produits alimentaires.

Plus précisément, l'invention concerne les installations destinées à effectuer des opérations de décongélation, cuisson, refroidissement et/ou congélation sur des produits alimentaires, en particulier mais non exclusivement sur des produits de la mer tels que les crevettes, avant leur mise en vente auprès des consommateurs.

Dans le domaine de l'invention, plusieurs techniques ont été proposées par l'art antérieur. On connaît notamment les solutions décrites par les documents de brevet FR A 2 756 146 et ES A 2 142 739, qui indiquent que le traitement des produits peut être réalisé en les baignant dans le liquide de traitement, de type eau ou saumure, ou en les plaçant sous des moyens d'application du liquide, tels que des rampes d'aspersion.

Dans le cas d'une aspersion de liquide sur les produits, il est courant que le liquide soit recyclé via un système comprenant des moyens de récupération, tels qu'un bac, positionnés sous les produits à traiter, reliés à des moyens de filtration et de pompage permettant de faire remonter le liquide dans les moyens d'application du liquide, au-dessus des produits à traiter.

Les produits de la mer peuvent en outre, suivant la solution décrite par le document FR 2 854 543, être transportés par des moyens de convoyage jusqu'à un poste de traitement où sont positionnés des moyens d'application du liquide comportant une structure munie d'une pluralité de perforations, permettant la distribution du liquide de traitement sous forme d'aspersion. Les perforations occupent une surface horizontale ou sensiblement horizontale délimitant la surface de traitement desdits produits. Selon une forme préférée de réalisation, les moyens d'application du liquide de traitement sont constitués de moyens assurant l'apport en liquide de traitement dans une cuvette d'arrosage formée d'un élément de fond délimité par une ceinture de parois, lequel élément de fond est muni d'une pluralité de perforations permettant une aspersion homogène du liquide de traitement sur les produits à traiter.

Cependant, les traitements par bains nécessitent beaucoup de temps, beaucoup de liquide de traitement et des installations complexes.

De même, les traitements par aspersion avec les systèmes existants sont contraignants car les perforations permettant l'aspersion se bouchent facilement.

En outre, des artefacts peuvent se former dans certains liquides de traitement. Les artefacts plus légers que le liquide, ou de densité proche de celle du liquide, ne sont pas évacués dans les systèmes de traitement existants, ce qui réduit l'efficacité des installations correspondantes.

De plus, la surface dotée d'une pluralité d'orifices générant l'aspersion du liquide de traitement ne peut pas être facilement modulée, avec les systèmes connus de l'art antérieur, d'où un manque de flexibilité pour ajuster les temps de traitement et/ou pour ajuster la surface à traiter des produits amenés par les moyens de convoyage dans la zone d'aspersion.

De surcroît, le mode d'aspersion est uniquement basé sur l'utilisation des orifices équipant une surface du système.

En outre, le dé-colmatage des perforations et le nettoyage des cuvettes d'arrosage sont très contraignants, l'accès aux cuvettes étant très limité et/ou nécessitant le démontage au moins partiel de l'installation.

L'invention a notamment pour objectif de pallier les inconvénients de l'art antérieur.

Plus précisément, l'invention a pour objectif de fournir un système d'aspersion permettant de moduler l'aspersion.

Un autre objectif de l'invention est de minimiser le risque d'obstruction des perforations ou orifices permettant l'aspersion du liquide.

L'invention a également pour objectif de faciliter la maintenance des installations de traitement, notamment en supprimant le besoin de démontage de leurs composants.

Ces différents objectifs, ainsi que d'autres qui apparaîtront par la suite, sont atteints avec une installation de traitement de produits alimentaires par un liquide, ladite installation comprenant des moyens de convoyage desdits produits et des moyens d'application dudit liquide sur lesdits produits, lesdits moyens d'application comprenant des moyens d'amenée dudit liquide dans au moins un déversoir, ledit déversoir présentant un élément de fond doté d'une pluralité d'orifices permettant la répartition par aspersion dudit liquide.

Selon l'invention, ledit déversoir est susceptible de présenter une position de traitement dans laquelle ledit élément de fond dudit déversoir s'étend selon une pente, et ledit élément de fond est bordé de parois, dont une paroi arrière et deux parois latérales.

Grâce à la pente présentée par l'élément de fond du déversoir, les orifices traversés par le liquide pour asperger les produits à traiter couvrent une surface, sur l'élément de fond du déversoir, qui varie en fonction du niveau du liquide dans le déversoir. La surface de produits couverte par le liquide peut donc être ajustée en modifiant la hauteur du liquide dans le déversoir, ce qui peut être obtenu notamment en faisant varier le débit de liquide injecté dans le déversoir.

Pour cela, la quantité et les dimensions des orifices équipant l'élément de fond du déversoir sont déterminés en tenant compte des débits avec lesquels le liquide est susceptible d'être injecté, de telle sorte que les orifices laissent passer un volume de liquide donné et, en même temps, permettent une accumulation et l'élévation du niveau du liquide dans le déversoir.

Ainsi, le temps de traitement des produits et la surface couverte instantanément par le liquide peuvent être modulés, indépendamment du mode de convoyage des produits, ce qui apporte de la flexibilité à l'installation. Par conséquent, les traitements peuvent être améliorés sur des produits transportés par des moyens de convoyage dont la vitesse reste constante. Par ailleurs, le besoin de faire varier la vitesse des moyens de convoyage en fonction des produits traités, peut être compensé avec un tel système d'aspersion. Combiné avec des moyens de convoyage dont la vitesse est réglable, un système d'aspersion selon l'invention peut également permettre de personnaliser et optimiser le traitement des produits transportés, éventuellement différents, ainsi que faire varier la cadence de production ou lisser la charge.

Bien entendu, la paroi arrière, les parois latérales et l'élément de fond en pente du déversoir sont reliés de façon étanche dans la partie basse du déversoir, pour éviter que le liquide injecté s'échappe du déversoir sans pouvoir atteindre les orifices.

En outre, les parois arrière et latérales doivent, en projection verticale, être au moins aussi hautes que les orifices les plus hauts présents sur l'élément de fond du déversoir en position de traitement, pour permettre au liquide de les atteindre tous, y compris les plus hauts.

Le choix d'un angle particulier entre les parois et le fond du déversoir peut, lui, permettre de jouer sur la capacité et la vitesse de remplissage du déversoir. Il peut être défini en fonction du débit maximum avec lequel le liquide peut être injecté ou lâché dans le déversoir, notamment pour empêcher le liquide de déborder tant que le débit d'injection ne dépasse pas une valeur donnée. Cet angle peut aussi être choisi de telle sorte que les parois s'étendent selon la verticale et que le déversoir, en projection verticale, reste dans l'encombrement des moyens de convoyage sur les lesquels sont transportés les produits à traiter.

Comme l'élément de fond du déversoir est en pente, les substances obstruant habituellement les orifices et tombant naturellement au fond du déversoir sont moins susceptibles d'entrer en contact avec les orifices. Pour isoler ces substances des orifices, un volume minimal peut être prévu dans la partie basse du déversoir, en dessous des orifices les plus bas du déversoir en position de traitement.

La pente selon laquelle s'étend l'élément de fond du déversoir peut comporter une ou plusieurs parties, de formes éventuellement différentes : la pente de chaque partie peut être plane, arrondie, ovale, convexe, concave, symétrique ou non...

Le déversoir comprend au moins une paroi arrière et deux parois latérales mais il peut aussi comporter, dans sa partie haute, une paroi avant. Par extension, le déversoir peut prendre la forme d'un bac, dont le périmètre est complètement bordé de parois, positionné pour le traitement des produits de telle sorte que l'élément de fond présente une pente.

Le déversoir peut comporter des parois présentant différentes hauteurs et différents angles par rapport à l'élément de fond.

De façon préférée, ledit déversoir présente une extrémité de débordement dudit liquide située à l'opposé de ladite paroi arrière dudit déversoir.

De cette façon, le débordement du liquide est canalisé vers l'avant du déversoir, où il peut former un rideau de liquide de traitement, et le risque de débordement par-dessus la paroi arrière et les parois latérales est minimisé. Ainsi, les dimensions du bac de récupération du liquide, sous les produits traités, peuvent également être minimisées.

Le débordement du liquide à l'avant du déversoir constitue un mode d'aspersion complémentaire de l'aspersion par les orifices de l'élément de fond du déversoir. Certains produits, pour lesquels le traitement par aspersion depuis les orifices n'est pas suffisant, peuvent donc en plus être douchés par le débordement de liquide. Ce mode d'aspersion est plus intensif que l'aspersion à travers les orifices, dans la mesure où le rideau de liquide de traitement se déversant sur les produits peut constituer une ligne continue sur toute la largeur des moyens de convoyage. L'intensité de ce mode d'aspersion est proportionnelle au débit de liquide injecté dans le déversoir.

Une installation selon l'invention permet donc de réaliser des traitements par aspersion selon deux modes distincts, complémentaires. Pour que le traitement soit progressif, en vue notamment de préserver la qualité des produits nécessitant les deux modes d'aspersion, les orifices équipant l'élément de fond du déversoir peuvent présenter des dimensions qui augmentent progressivement, entre la partie basse voisine de la paroi arrière et la partie haute voisine de l'extrémité de débordement.

Le système d'aspersion par les orifices constitue alors un mode d'aspersion progressif, se distinguant nettement du mode d'aspersion intensif que constitue le débordement du liquide à l'avant du déversoir.

Par ailleurs, l'extrémité de débordement est éloignée au maximum de la partie du déversoir par laquelle le déversoir, en position de traitement, commence naturellement à se remplir. En versant le liquide au voisinage de la paroi arrière du déversoir, avec un débit suffisant, on peut ainsi créer un flux du liquide dans le déversoir, entre la paroi arrière et l'extrémité de débordement, qui facilite l'écoulement du liquide.

En utilisant cette fonction de débordement canalisé du liquide remplissant le déversoir, les artefacts susceptibles de se former dans le liquide peuvent aussi, même lorsqu'ils sont plus légers que le liquide, facilement et sans moyen supplémentaire être évacués du déversoir. Les artefacts peuvent être constitués par des matières étrangères aux produits (sable, terre, graviers) ou détachés des produits eux-mêmes (opercules du bulot, pattes de crevettes...).

L'extrémité de débordement peut être réalisée au niveau d'une paroi avant équipant le déversoir et venant en complément des parois arrière et latérales bordant l'élément de fond. Pour faciliter l'écoulement du liquide en débordement et l'accès dans le déversoir, l'angle entre la paroi avant et le fond du déversoir doit être plus proche de 180° que de 90°.

Cependant, selon une solution préférée, ladite extrémité de débordement dudit déversoir est dépourvue de paroi.

Ainsi, le débordement du liquide s'effectue, en position de traitement, au niveau de l'extrémité haute de l'élément de fond du déversoir.

De plus, le nombre de recoins potentiellement difficiles à nettoyer peut s'en trouver réduit, et l'ouverture créée par l'absence de paroi au niveau de l'extrémité de débordement facilite l'accès à l'intérieur du déversoir, y compris aux recoins éventuellement restants, sans nécessiter d'opérations de démontage.

Lors des opérations de maintenance, les artefacts et autres résidus présents dans le déversoir peuvent facilement être balayés et évacués par l'extrémité dépourvue de paroi.

De façon avantageuse, ledit élément de fond dudit déversoir est plan et dimensionné de telle sorte que ledit liquide puisse tomber, à travers lesdits orifices et/ou par débordement, sur toute la largeur desdits moyens de convoyage.

La forme plane de l'élément de fond du déversoir permet d'obtenir le meilleur compromis entre le coût de réalisation et la fonction attendue du déversoir selon l'invention.

Le dimensionnement de l'élément de fond, en permettant la chute de liquide sur toute la largeur des moyens de convoyage, permet en outre de garantir que toute la surface des produits à traiter transportés peut, en projection horizontale, être couverte par l'aspersion de liquide.

Avantageusement, ledit déversoir est monté mobile entre deux positions :
- une première position correspondant à ladite position de traitement et
- une deuxième position dite position de maintenance.

Ainsi, la position la plus adaptée au traitement des produits à traiter par le liquide peut être définie indépendamment des contraintes d'ergonomie liées à la maintenance réalisée manuellement sur le déversoir.

De façon préférée, ledit déversoir est monté pivotant par rapport à un axe situé au voisinage de ladite paroi arrière, ledit axe étant horizontal et parallèle à ladite paroi arrière.

De cette façon, le basculement du déversoir entre la première et la seconde position peut permettre d'amener l'élément de fond suivant une pente dont le point bas est au plus près de l'opérateur, apportant à ce dernier davantage d'ergonomie pour réaliser des opérations de maintenance dans le déversoir.

De plus, le basculement peut permettre de vider plus rapidement et complètement le déversoir, en forçant le liquide, les artefacts et autres résidus éventuellement restants, gravitairement, vers l'extrémité de débordement. L'accumulation de substances dans la partie du déversoir où commence le remplissage, c'est-à-dire entre les parois arrière, latérales et l'élément de fond, peut alors être nettoyée sans qu'une importante opération de maintenance soit nécessaire.

Selon un mode de réalisation préférentiel, lesdits moyens d'amenée dudit liquide comprennent au moins un collecteur, apte à être rempli avec ledit liquide et présentant au moins une extrémité de débordement, ladite ou lesdites extrémités de débordement étant positionnées au-dessus d'un déversoir.

Le collecteur, positionné en amont par rapport au déversoir, absorbe les fluctuations de débit suivant lesquelles le liquide peut être apporté, manuellement ou via un système de recyclage.

Le flux de liquide réalisé dans le déversoir est de ce fait plus homogène et le risque de brassage du liquide avec les artefacts et autres substances susceptibles de boucher les orifices est alors limité, ce qui augmente l'efficacité de l'installation.

De façon avantageuse, ladite ou lesdites extrémités de débordement dudit collecteur sont positionnées au voisinage de ladite paroi arrière d'un déversoir.

Ainsi, le liquide débordant du collecteur est dirigé vers la partie du déversoir par laquelle il commence à se remplir. De plus, les résidus les plus lourds susceptibles d'obstruer les orifices de l'élément de fond du déversoir tombent directement au fond du déversoir, sans passer au voisinage de la majorité des orifices. L'efficacité du flux de liquide entre le collecteur et le déversoir est, de cette façon, améliorée.

Selon une solution préférée, l'installation de traitement selon l'invention comporte deux déversoirs positionnés de telle sorte que ladite paroi arrière d'un déversoir est en vis-à-vis de ladite paroi arrière de l'autre déversoir.

Cette configuration particulière permet de couvrir une grande surface d'aspersion, avec non pas un déversoir de grande taille, éventuellement trop encombrant, trop lourd et trop contraignant pour la maintenance, mais deux déversoirs de plus petite taille, positionnés dos à dos. Dans ce cas, le mouvement de basculement des déversoirs peut être agencé de telle sorte que la maintenance soit effectuée depuis les extrémités opposées des deux déversoirs côte à côte.

Avantageusement, lesdits deux déversoirs sont alors alimentés par un même collecteur, doté d'extrémités de débordement orientées respectivement vers le premier et vers le second déversoir.

Le nombre de déversoirs peut ainsi être augmenté tout en conservant un seul collecteur, ce qui représente un avantage économique certain.

La conception du collecteur peut en outre permettre d'obtenir une répartition homogène entre les flux de liquide vers les deux déversoirs.

Bien entendu, d'autres installations basées sur la juxtaposition ou la superposition de collecteurs et déversoirs peuvent être envisagées, sans sortir du cadre de l'invention.

D'autres caractéristiques et avantages de l'invention apparaîtront plus clairement à la lecture de la description suivante des modes de réalisation préférentiels de l'invention, donnés à titre d'exemples illustratifs et non limitatifs, et des dessins parmi lesquels :
- la figure 1 illustre de façon schématique et selon une vue en perspective, une installation de traitement de produits alimentaires selon un premier mode de réalisation préférentiel de l'invention ;
- la figure 2 illustre de façon schématique une installation de traitement de produits alimentaires selon la figure 1, avec une représentation du flux de liquide lorsque l'installation est en fonctionnement ;
- la figure 3 illustre de façon schématique une installation de traitement de produits alimentaires, en vue de côté, selon un deuxième mode de réalisation préférentiel de l'invention ;
- la figure 4 est une vue agrandie extraite de la figure 3, représentant le système comprenant un collecteur et deux déversoirs en position de traitement ;
- la figure 5 est une vue adaptée de la figure 4, dans laquelle l'un des deux déversoirs est en position de traitement et l'autre est en position de maintenance ;
- la figure 6 est une vue adaptée de la figure 4, dans laquelle les deux déversoirs sont en position de maintenance.

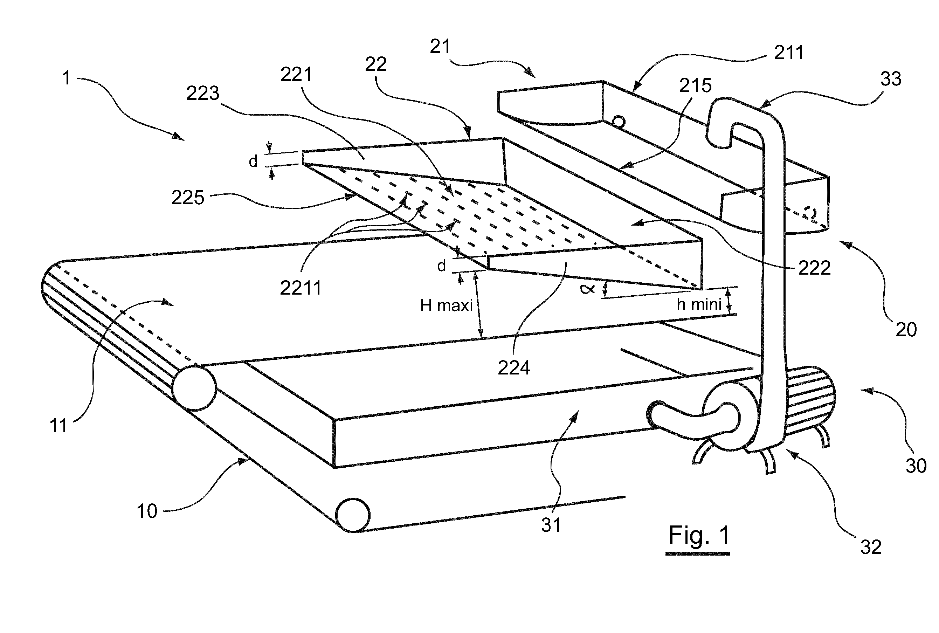

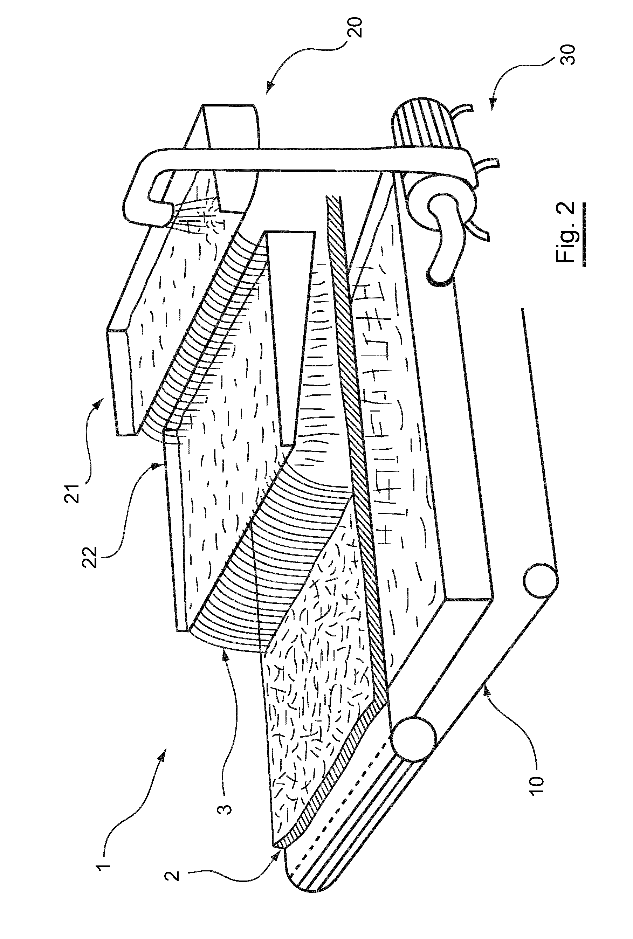

En référence aux figures 1 et 2, une installation 1 de traitement de produits 2 alimentaires par un liquide 3 comprend :
- des moyens 10 de convoyage des produits 2 ;
- des moyens 20 d'application du liquide 3 sur les produits 2 ;
- éventuellement, des moyens 30 de recyclage du liquide 3.

Les moyens 20 d'application du liquide comprennent des moyens 21 d'amenée du liquide 3 dans au moins un déversoir 22.

Les moyens 30 de recyclage comprennent un bac 31 de récupération du liquide 3, auquel est connecté un système 32 de pompage et de filtration, dont la sortie 33 réinjecte le liquide dans les moyens 20 d'application du liquide.

Le bac de récupération 31 est intégré dans les moyens 10 de convoyage, sous la partie de la bande 11 sur laquelle sont situés les produits 2 en position de traitement. Les produits 2 peuvent être transportés dans des barquettes adaptées.

Les moyens 21 d'amenée du liquide comportent un ou plusieurs collecteur(s) 211, apte(s) à être rempli(s) manuellement ou par un système automatique tel que les moyens 30 de recyclage du liquide 3.

Chaque collecteur 211 présente au moins une extrémité de débordement 215, positionnée au-dessus d'un déversoir 22, de telle sorte que l'eau débordant du collecteur tombe dans le déversoir.

Le déversoir 22 présente un élément de fond 221 doté d'une pluralité d'orifices 2211 permettant une répartition par aspersion du liquide 3.

Une répartition judicieuse des orifices 2211 permet d'obtenir une aspersion homogène du liquide 3 sur les produits 2.

Selon l'invention, le déversoir 22 présente une position de traitement dans laquelle l'élément de fond 221 s'étend selon une pente, matérialisée sur la figure 1 par l'angle α par rapport à l'horizontale, ainsi que par les hauteurs h mini et H maxi des extrémités de l'élément de fond 221 par rapport à la surface des moyens 10 de convoyage, H maxi étant strictement et significativement supérieure à h mini.

Selon l'invention, également, l'élément de fond 221 est bordé de parois, dont une paroi arrière 222 et deux parois latérales 223 et 224.

Dans un mode de réalisation préférentiel de l'invention, l'élément de fond 221 est rectangulaire et les parois 222, 223 et 224 ont une hauteur telle que leur partie supérieure constitue, dans la position de traitement, un plan horizontal.

Ce plan horizontal est plus haut que l'extrémité du déversoir 22 opposée à la paroi arrière 222, d'une valeur d correspondant à la hauteur des extrémités des parois latérales 223 et 224.

Ainsi, le déversoir 22 présente une ouverture entre les extrémités des parois latérales 223 et 224, à l'opposé de la paroi arrière 222, telle qu'en cas de débordement, le liquide 3 sortira prioritairement par cette ouverture.

Le déversoir 22 présente donc une extrémité de débordement 225 du liquide 3 située à l'opposé de la paroi arrière 222.

L'extrémité de débordement 225 est, selon un mode de réalisation préférentiel de l'invention, dépourvue de paroi. Par conséquent, la valeur d correspond à la distance entre l'arête haute de l'élément de fond 221 et le plan formé par la partie supérieure des parois 222, 223 et 224.

Le liquide injecté dans le déversoir remplit ce dernier progressivement, depuis sa partie basse, voisine de la paroi arrière 222, jusqu'à sa partie haute, dont fait partie l'extrémité de débordement 225.

Or, selon l'invention, la ou les extrémités de débordement 215 du collecteur 211 sont positionnées au voisinage de la paroi arrière 222 d'un déversoir 22. Un flux de liquide peut donc se créer, depuis le collecteur 211, via l'extrémité de débordement 215, la partie basse et creuse du déversoir 22 et les orifices 2211, voire l'extrémité de débordement 225.

Ainsi, une augmentation du débit de liquide injecté dans le collecteur 211 accroît le débordement de liquide 3 vers le déversoir 22, ce qui entraîne l'élévation du niveau de liquide dans le déversoir et peut permettre au liquide de sortir par les orifices 2211 sur une plus grande longueur selon la direction d'avance des moyens 10 de convoyage.

Par conséquent, la surface d'aspersion est directement liée au débit de liquide dans le collecteur.

Enfin, l'élément de fond 221 du déversoir représenté sur la figure 1 est plan et dimensionné de telle sorte que le liquide 3 puisse tomber, à travers les orifices 2211 et/ou par débordement, sur toute la largeur des moyens 10 de convoyage.

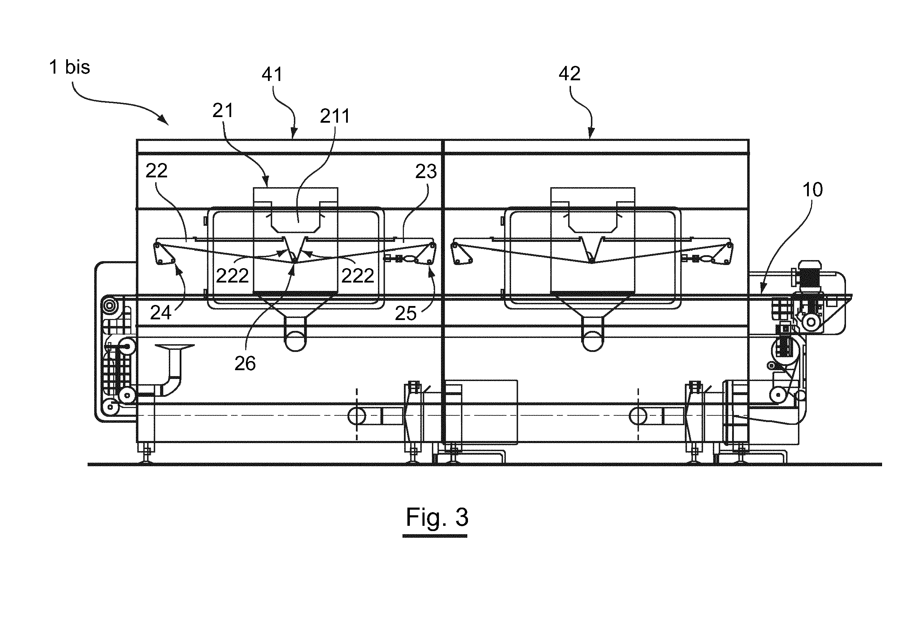

Selon un autre mode de réalisation préférentiel de l'invention, illustré par la figure 3, une installation Ibis de traitement de produits alimentaires par un liquide peut être décomposée en plusieurs (deux, en l'occurrence) modules 41, 42, positionnés côte à côte, ou espacés, sur le chemin emprunté par les produits transportés par les moyens 10 de convoyage.

Les caractéristiques détaillées ci-après du module 41 peuvent être également appliquées au module 42.

Le module 41 comprend deux déversoirs 22, 23, ainsi que des moyens 21 d'amenée du liquide communs à ces deux déversoirs, comportant un collecteur 211.

Les déversoirs 22, 23 sont positionnés de telle sorte que la paroi arrière 222 du déversoir 22 est en vis-à-vis de la paroi arrière 222 du déversoir 23.

Ainsi, l'installation de traitement Ibis comporte deux déversoirs 22, 23, positionnés de telle sorte que la paroi arrière 222 d'un déversoir 22 est en vis à vis de la paroi arrière 222 de l'autre déversoir 23, et ces deux déversoirs sont alimentés par un même collecteur 211.

Les déversoirs 22, 23 sont chacun équipés d'un système articulé 24, 25 permettant de les déplacer, entre une position spécifiquement réservée à l'aspersion de liquide sur les produits alimentaires et une position réservée aux opérations de maintenance.

Ainsi, chaque déversoir 22, 23 est monté mobile entre deux positions :
- une première position correspondant à ladite position de traitement et
- une deuxième position dite position de maintenance.

Plus précisément, les systèmes articulés 24, 25 permettent d'effectuer une rotation des déversoirs respectifs 22, 23 par rapport à un axe 26. Ainsi, chaque déversoir est monté pivotant par rapport à un axe 26 situé au voisinage de sa paroi arrière 222, cet axe de rotation étant horizontal et parallèle à la paroi arrière du déversoir.

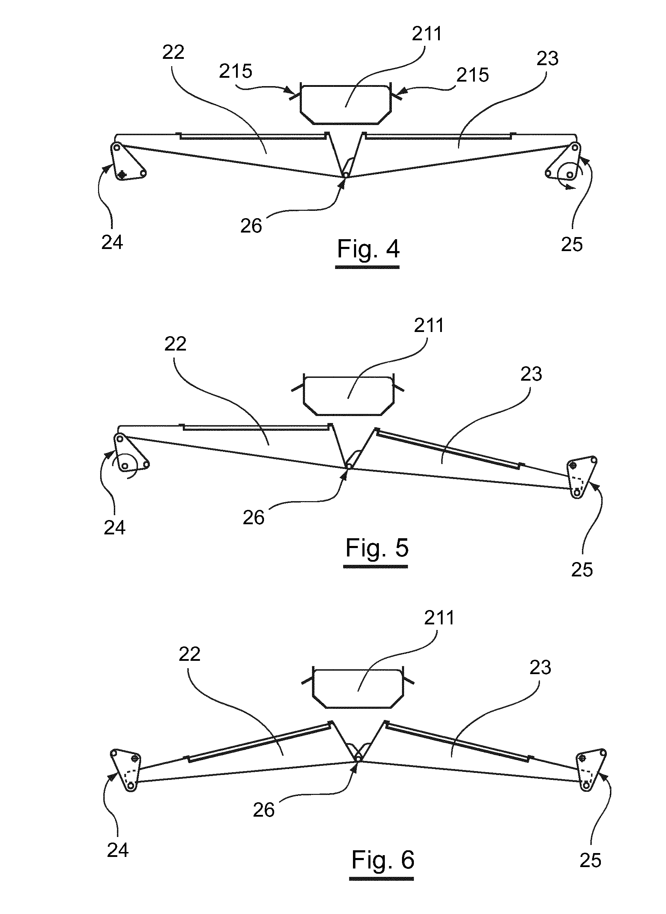

Dans le mode de réalisation illustré sur les figures 4 à 6, isolant à titre d'exemple le module 41, l'axe 26 de rotation est commun aux deux déversoirs 22, 23 et permet de les positionner, au choix, soit tous les deux dans la première position dite de traitement, soit tous les deux dans la deuxième position dite de maintenance, soit l'un dans la première position et l'autre dans la deuxième position.

D'autres modes de réalisation, basés sur les principes d'une installation de traitement de produits alimentaires par un liquide telle celle qui vient d'être décrite, sont bien sûr envisageables sans sortir du cadre de l'invention.

## Revendications

1. **-** Installation de traitement de produits alimentaires par un liquide, ladite installation comprenant des moyens (10) de convoyage desdits produits (2) et des moyens (20) d'application dudit liquide (3) sur lesdits produits, lesdits moyens d'application comprenant des moyens (21) d'amenée dudit liquide dans au moins un déversoir (22, 23), ledit déversoir présentant un élément de fond (221) doté d'une pluralité d'orifices (2211) permettant la répartition par aspersion dudit liquide, **caractérisée en ce que** ledit déversoir est susceptible de présenter une position de traitement dans laquelle ledit élément de fond dudit déversoir s'étend selon une pente et **en ce que** ledit élément de fond est bordé de parois, dont une paroi arrière (222) et deux parois latérales (223, 224).

2. **-** Installation de traitement suivant la revendication 1, **caractérisée en ce que** ledit déversoir (22) présente une extrémité de débordement (225) dudit liquide (3) située à l'opposé de ladite paroi arrière (222) dudit déversoir.

3. **-** Installation de traitement suivant la revendication 2, **caractérisée en ce que** ladite extrémité de débordement (225) dudit déversoir (22) est dépourvue de paroi.

4. **-** Installation de traitement suivant l'une quelconque des revendications 1 à 3, **caractérisée en ce que** ledit élément de fond (221) dudit déversoir (22) est plan et dimensionné de telle sorte que ledit liquide (3) puisse tomber, à travers lesdits orifices (2211) et/ou par débordement, sur toute la largeur desdits moyens (10) de convoyage.

5. **-** Installation de traitement suivant l'une quelconque des revendications 1 à 4, **caractérisée en ce que** ledit déversoir (22) est monté mobile entre deux positions :
- une première position correspondant à ladite position de traitement et
- une deuxième position dite position de maintenance.

6. **-** Installation de traitement suivant la revendication 5, **caractérisée en ce que** ledit déversoir (22) est monté pivotant par rapport à un axe situé au voisinage de ladite paroi arrière, ledit axe étant horizontal et parallèle à ladite paroi arrière (222).

7. **-** Installation de traitement suivant l'une quelconque des revendications 1 à 6, **caractérisée en ce que** lesdits moyens (21) d'amenée dudit liquide (3) comprennent au moins un collecteur (211), apte à être rempli avec ledit liquide et présentant au moins une extrémité de débordement (215), ladite ou lesdites extrémités de débordement étant positionnées au-dessus d'un déversoir (22).

8. **-** Installation de traitement suivant la revendication 7, **caractérisée en ce que** ladite ou lesdites extrémités de débordement (215) dudit collecteur (211) sont positionnées au voisinage de ladite paroi arrière (222) d'un déversoir (22).

9. **-** Installation de traitement suivant l'une quelconque des revendications 1 à 8, **caractérisée en ce qu'**elle comporte deux déversoirs (22, 23) positionnés de telle sorte que ladite paroi arrière (222) d'un déversoir (22) est en vis-à-vis de ladite paroi arrière (222) de l'autre déversoir (23).

10. **-** Installation de traitement suivant les revendications 7 et 9, **caractérisée en ce que** lesdits deux déversoirs (22, 23) sont alimentés par un même collecteur (211).
